# EUROPÄISCHE PATENTSCHRIFT

(11) **EP 2 775 361 B1**
(45) Veröffentlichungstag und Bekanntmachung des Hinweises auf die Patenterteilung: **02.01.2019**
(21) Anmeldenummer: 14000310.4
(22) Anmeldetag: 28.01.2014
(51) Int. Cl.: G05B 15/02, G05B 19/418

(54) **System und Verfahren zur Ereignisprotokollierung in einer technischen Anlage oder einem technischen Prozess**
System and method for event logging in a technical system or a technical process
Système et procédé de consignation événements dans une installation technique ou un processus technique

(30) Priorität: 05.02.2013 DE 102013001926
(43) Veröffentlichungstag der Anmeldung: 10.09.2014
(73) Patentinhaber: ABB AG, 68309 Mannheim (DE)
(72) Erfinder: Hollender, Martin, 69221 Dossenheim (DE); Rissanen, Mikko, 564596 Singapur (SG)

(56) Entgegenhaltungen:
- WO-A1-2009/018859
- DE-A1- 10 007 972
- DE-A1-102011 078 206

## Beschreibung

Die Erfindung betrifft ein Protokollier- System zur Erfassung, Aufbereitung und Darstellung von anlagen- und/oder prozessspezifischen Informationen aus Alarm- und/oder Ereignisprotokollen, wie Bedienhandlungen, Prozessmeldungen, Alarmmeldungen, Systemereignissen, digitalen Textnachrichten (Audit- Protokollen) und Anlagenparametern, einer technischen Anlage oder eines technischen Prozesses, das in einem Bedien- und Beobachtungssystem der technische Anlage oder des technischen Prozesses integrierbar ist und das Bedien- und Beobachtungssystem insbesondere in einer Leitwarte oder Leitanlage einer großtechnischen Anlage, beispielsweise einer Öl- und Gasplattform, einer Raffinerie oder einer Kraftwerksanlage eingesetzt ist. Weiterhin betrifft die Erfindung ein Verfahren zur Erfassung, Aufbereitung und Darstellung von anlagen- und/oder prozessspezifischen Informationen, welche dem Bedien- und/oder Wartungspersonal der Anlage oder des Prozesses bereitgestellt werden.

Insbesondere in großtechnischen Anlagen wird eine Vielzahl von anlagen- oder prozessspezifischen Informationen, zu denen Bedienhandlungen, Prozessmeldungen, Alarmmeldungen, Systemereignisse, Audit- Protokolle und Anlagenparameter zählen, als Alarm- und Ereignisprotokolle gespeichert.

In der WO 2009/112252 sind ein Verfahren und eine Einrichtung zur Speicherung von Daten, die jeweils zu einer mehrere Attribute enthaltenden Alarm- oder Ereignismeldungen gehören, beschrieben, wobei in einer festgelegten Tabelle ein erster Teil der zu einer Alarm- oder Ereignismeldung gehörigen Attribute normiert direkt gespeichert wird, und zusätzlich sowohl der erste Teil, als auch ein restlicher zweiter Teil der Attribute als ein Verfügungsdatensatz gespeichert wird.

DE10007972 offenbart ein Diagnose-Tool zur Verwendung in einem Prozesssteuersystem, welches Daten, die zu den verschiedenen Funktionsblöcken von Einrichtungen und Kreisen innerhalb des Systems gehören, automatisch sammelt und speichert.

DE102011078206 beschreibt, einen Digitalstift, der zusammen mit digitalem Papier eingestzt wird, um ein Element eines technischen Systems mittels einer handschriftlichen Eingabe zu selektieren und ggf. abhängig von dieser Selektion eine Information betreffend das Element zu verarbeiten. Ein in dem Digitalstift integriertes Mikrofon ermöglicht eine Aufnahme von Sprachnotizen. Diese Sprachnotizen können mit dem während der Aufnahme geschriebenen Text verknüpft werden, z.B. kann eine Sprachnotiz elektronisch zusammen mit dem digitalisierten geschriebenen Text gespeichert werden.

Gegenwärtig eingesetzten Bedien- und Beobachtungssystemen großtechnischer Anlagen, wie Leitsystemen, auch Digital Control System (DCS) genannt, protokollieren Zeitreihendaten und/oder historische Prozesswerte aus Prozesssignalen sowie Ereignisdaten, aus Prozessalarmen, Systemereignisse und Audit-Protokollen und legen diese Daten in entsprechenden Archiven, beispielsweise in speziellen Datenbanken mit Echtzeitfunktionen ab, wo diese Daten zur Langzeitspeicherung in festgelegten Zeitabständen gespeichert werden. Insbesondere umfassen die historischen Prozesswerte Grenzwertüberschreitungen und/oder Grenzwertunterschreitungen die üblicherweise mit einem Zeitstempel verknüpft werden.

Die gespeicherten Daten werden unter anderem dazu verwendet Unfälle und Störfälle sowie den Prozess als Ausgangsbasis für Verbesserungen zu analysieren, beispielsweise zur Regelkreisabstimmung, zur Alarmverwaltung, für Überwachungs- oder Prüfprotokolle, sogenannte Audit Trails, und für Nachweise über die Einhaltung von Grenzwerten im Hinblick auf gesetzliche und umwelttechnische Bestimmungen.

Die Handhabung der in Protokollen gespeicherten Daten wird dadurch erschwert, dass wichtige Informationen zum operationellen Kontext nicht eingebunden sind. Oft ist nicht klar, ob eine Reduzierung der Produktionsmenge auf ein Prozessproblem zurückzuführen ist oder ob es sich dabei um eine beabsichtigte Änderung des Produktionsplans gehandelt hat.

Beispielsweise wäre eine defekte Pumpe mit verminderter Kapazität dem Bedienern der Anlage bekannt. Wenn dieser Zustand jedoch nicht direkt in das Protokollier- System der Anlage eingegeben wird, ist es zu einem späteren Zeitpunkt schwierig nachzuvollziehen, warum es zu einer verminderten Kapazität der Pumpe kommt, die durch entsprechende Meldungen angezeigt wird, da der Grund für das Absinken der Kapazität nicht nachvollziehbar ist. Der Defekt der Pumpe, also Informationen zum operationellen Kontext sind in den bereitgestellten Protokollen oft nicht mehr wiederzufinden, obwohl sie für bestimmte Analysen essentiell wären.

Zum gegenwärtigen Zeitpunkt nutzen Bediener Steuerungs- bzw. SCADA Systeme, um Industrieprozesse oder ein Stromnetz zu verwalten. Ergänzend dazu ist es erforderlich, dass sie beispielsweise mit dem Wartungspersonal zusammenarbeiten, das sich außerhalb des Kontrollraums aufhält. Diese Zusammenarbeit erfordert oft zahlreiche Telefonate, den Austausch von Emails und den Austausch mit übergeordneten Systemen, wie einem computerunterstütztem Instandhaltungs-Management-System CMMS (Computerized Maintenance Management System) oder einem Enterprise Ressource Planning System (ERP), welches die Einsatzplanung der in einem Unternehmen vorhandenen Ressourcen verwaltet.

Oft werden auch wichtige Informationen als Gedächtnisstützen auch auf Klebe- bzw. Notizzettel niedergeschrieben, die später verloren gehen können.

Viele Anlagenbediener vermeiden es auch, Texte in einen bereitstehenden Computer einzugeben, wie beispielsweise ein elektronisches Schichtbuch, da dies oft zu zeitaufwändig erscheint.

Der Erfindung liegt demgemäß die Aufgabe zugrunde, ein System und ein Verfahren zur Erfassung, Aufbereitung und Darstellung von Informationen aus Alarm- und/oder Ereignisprotokollen, wie anlagen- und/oder prozessspezifischen Bedienhandlungen, Prozessmeldungen, Alarmmeldungen, Systemereignissen, digitalen Textnachrichten und Anlagenparametern, einer technischen Anlage oder eines technischen Prozesses, das vorzugsweise in einem Bedien- und Beobachtungssystem der großtechnischen Anlage oder des technischen Prozesses integrierbar ist, anzugeben, wodurch vorgenannte Nachteile des Standes der Technik überwunden werden.

Mit dem erfindungsgemäßen System und Verfahren zur Ereignisprotokollierung sollen die für den Betrieb der Anlage oder des Prozesses notwendigen relevanten Kontextinformationen zu bestimmten Ereignissen in einem einheitlichen, durchsuchbaren Protokollier- System abgelegt und so aufbereitet werden, dass ein Zusammenhang zwischen Bedienern in den Kontrollräumen der Anlage oder des Prozesses sowie deren Möglichkeiten, alle Informationen zu erfassen und direkt zu nutzen, die während Arbeitssituationen anfallen, herstellbar ist.

Diese Aufgabe wird erfindungsgemäß durch ein Protokollier- System zur Erfassung, Aufbereitung und Darstellung von anlagen- und/oder prozessspezifischen Informationen aus Alarm- und/oder Ereignisprotokollen, wie anlagen- und/oder prozessspezifischen Bedienhandlungen, Prozessmeldungen, Alarmmeldungen, Systemereignissen, digitalen Textnachrichten und Anlagenparametern, einer technischen Anlage oder eines technischen Prozesses mit den in Ansprüchen 1 und 10 angegebenen Merkmalen gelöst. Vorteilhafte Ausgestaltungen, Verbesserungen des erfindungsgemäßen Systems und ein entsprechendes Verfahren zur Erfassung, Aufbereitung und Darstellung von anlagen- und/oder prozessspezifischen Bedienhandlungen, Prozessmeldungen, Alarmmeldungen, Systemereignissen, digitalen Textnachrichten und Anlagenparametern einer technischen Anlage oder eines technischen Prozesses sind in weiteren Ansprüchen und in der Beschreibung angegeben.

Die erfindungsgemäße Protokollier- System zur Erfassung, Aufbereitung und Darstellung von anlagen- und/oder prozessspezifischen Bedienhandlungen, Prozessmeldungen, Alarmmeldungen, Systemereignissen, digitalen Textnachrichten und Anlagenparametern einer technischen Anlage oder eines technischen Prozesses umfasst wenigstens eine Eingabevorrichtung, welche akustische und/oder gesprochene Informationen und in schriftlicher Form vorliegende Informationen automatisch in digitale Textnachrichten umgewandelt und zusammen mit Informationen zu Bedienhandlungen, Informationen zu durchgeführten Navigationsschritten und weitere in digitalisierter Form vorliegende Textinformationen, die beispielsweise in einem SAP-System abgelegt sind, einer Verarbeitungseinheit bereitstellt.

Akustische und/oder gesprochene Informationen können beispielsweise Informationen sein, die ein Telefon- oder Lautsprechersystem bereitstellt. Die in schriftlicher Form vorliegenden Informationen sind unter anderem handgeschriebene Notizen und Vermerke, die beispielsweise mittels eines digitalen Stiftes automatisch in digitale Textnachrichten umwandelbar sind. Beispiele für die bereits in digitalisierter Form vorliegende Textinformationen sind Emails und /oder Arbeitsaufträge sowie Wartungs- und Revisionsaufzeichnungen, die übergeordneten Systeme, wie beispielsweise computerunterstützte Instandhaltungs-Management-Systeme (CMMS), Maintenance Management Systeme (MMS) und/oder Enterprise Ressource Planning System (ERP) bereitstellen.

Bedienhandlungen umfassen beispielsweise Aktionen an Komponenten der Anlage bzw. des Prozesses, wie das Öffnen eines Ventils und werden vorzugsweise von einem Überwachungssystem der Anlage oder des Prozesses bereitstellt.

Die im Protokollier- System erfassten Navigationsschritte stellt üblicherweise ein Überwachungssystem (SCADA-System) der Anlage oder des Prozesses bereit. Zu den Navigationsschritten zählen unter anderem das Öffnen spezifischer Bereichs- oder Trendanzeigen und sind dafür vorgesehen, zu einem späteren Zeitpunkt bei einer Analyse der protokollierten Informationen oder Daten einen entsprechenden Kontext bereitzustellen, aus dem erkennbar ist, dass sich diese Bereichs- oder Trendanzeige im Fokus der Bediener der Anlage oder des Prozesses befanden.

Die Textnachrichten, Bedienhandlungen, Prozessmeldungen, Alarmmeldungen, Systemereignisse und/oder Anlagenparameter sind über entsprechend zugeordnete Adapter, zu denen beispielsweise ein Sprachadapter zählt, in die Verarbeitungseinheit übertragbar, wobei die Adapter in vorteilhafter Weise die in digitaler Form vorliegenden Textnachrichten, die Bedienhandlungen, die Prozessmeldungen, die Alarmmeldungen, die Systemereignisse und/oder die Anlagenparameter automatisch normieren, standardisieren und/oder nach vorgebbaren Parametern, wie vorab definierte Schlüsselworte, filtern. Beispielweise könnten bestimmte Schlüsselwörter definiert werden, die dafür sorgen dass eine Mitteilung nicht protokolliert wird. Sagt ein Operator beispielsweise die Schlüsselworte "Aufzeichnung unterbrechen", wird die Konversation nicht aufgezeichnet und steht damit einer weiteren Verarbeitung nicht mehr zur Verfügung.

Adapter sind Software bzw. Softwareprogramme, welche eine bestimmte Datenquelle auswerten. Die Adapter arbeiten dazu mit unterschiedlichen Datenquellen, produzieren aber einheitlich normierte Meldungen, die der weiteren Verarbeitung zur Verfügung stehen. Dabei erfolgt eine eindeutige Zuordnung und Normierung der entsprechenden digitalen Textnachrichten.

Mit einer vorab durchgeführten Filterung der Textnachrichten, Bedienhandlungen, Prozessmeldungen, Alarmmeldungen, Systemereignisse und/oder Anlagenparameter wird in vorteilhafter Weise erreicht, dass ansonsten zu viele wertlose Nachrichten im Protokollier- System abgelegt werden.

Wenn beispielsweise der Adapter, welcher die akustischen oder Audiosignale bearbeitet, einen Kurznamen für ein Signal identifiziert (der offizielle Signalname könnte "1LAB10FF901" lauten), während der Bediener es "Hochdruckdampf" nennt, dann kann der Adapter eine vorkonfigurierte Tabelle nutzen, um den Signalnamen zu identifizieren und dem Protokolleintrag zuzuordnen. Wird eine bestimmte Pumpe im ERP- System unter der Bezeichnung "xyz" geführt, übersetzt der Adapter diese Bezeichnung beispielsweise in "P4711". Eine Suche im Protokoll nach "P4711" findet deshalb alle Erwähnungen der Pumpe egal aus welchem System sie ursprünglich kommen.

Wenn später ein Ereignis mit diesem Signal zu analysieren ist, kann davon ausgegangen werden, dass die gesprochene Nachricht oder Information mit diesem Ereignis in Verbindung steht, selbst wenn nur der Kurzname genannt bzw. gesprochen wurde.

Da CMMS-, ERP- und MES- Systeme oft einen eigenen Syntax bzw. ein eigenes Namensschema für entsprechende Informationen, Daten, Ereignisse oder Signale nutzen, werden diese Informationen, Daten, Ereignisse oder Signale dann entsprechend dem einheitlichen Namensschema des Protokollier- Systems im Adapter abgebildet.

Erfindungsgemäß ist die im Protokoliersystem integrierte Verarbeitungseinheit dafür eingerichtet, den digitalen Textnachrichten, den Informationen zu Bedienhandlungen und den durchgeführten Navigationsschritten automatisch Zeitstempel zuzuordnen bzw. diese damit zu verknüpfen. Die mit den entsprechenden Zeitstempeln verknüpften digitalen Textnachrichten umfassen insbesondere Informationen darüber, welche Person oder welches Ereignis zu welchem Zeitpunkt und/oder in welcher Reihenfolge die jeweilige Textnachricht veranlasst hat.

Wenigstens ein in der Verarbeitungseinheit vorgesehenes Suchmodul ordnet zusammen mit aus wenigstens einem Datenarchiv bereitgestellten Zeitreihendaten von Prozesssignalen- und Alarmmeldungen, Systemereignissen sowie Anlagenparametern einen entsprechender Kontext zu bestimmten Ereignissen zu, wie beispielsweise eine Wartung oder ein Ausfall eines Anlagenteiles zu einer ausgelösten Prozess- oder Alarmmeldung.

Dadurch ist es möglich Anomalien in Zeitreihen durch den Kontext zu erklären und es ist einfacher, die mit den Zeitreihendaten verknüpften Handlungen, Meldungen, Ereignisse, Daten und/oder Parameter der Anlage oder des Prozesses zu interpretieren und auszuwerten.

Die aufbereiteten digitalen Textnachrichten, Bedienhandlungen, Prozessmeldungen, Alarmmeldungen, Systemereignisse und Anlagenparameter sind erfindungsgemäß über eine im Suchmodul integrierte Komplettsuche abrufbar und als Bedienerprotokoll oder Ereignisprotokoll darstellbar.

Beispielsweise wird nach einem Begriff "P4711", der ein bestimmtes Aggregat, wie eine Pumpe beschreibt, gesucht und alle damit verknüpften Informationen, zu denen u.a. akustische und digitale Textnachrichten gehören, die dieses Aggregat betreffen, werden aus den in den SMS-, ERP-, CMMS-, DCS- Systemen gespeicherten Informationen herausgefiltert oder herausgesucht.

In einer vorteilhaften Ausgestaltung des erfindungsgemäßen Protokollier- Systems sind die im Bedienerprotokoll aufbereiteten digitalen Textnachrichten, Bedienhandlungen, Prozessmeldungen, Alarmmeldungen, Systemereignisse und Anlagenparameter dynamisch anpassbar bzw. aktualisierbar.

Das Verfahren zur Erfassung, Aufbereitung und Darstellung von anlagen- und/oder prozessspezifischen Bedienhandlungen, Prozessmeldungen, Alarmmeldungen, Systemereignissen, Anlagenparametern und digitalen Textnachrichten einer technischen Anlage oder eines technischen Prozesses, mit dem die Aufgabe weiterhin gelöst wird, beruht darauf, dass mittels wenigstens einer Eingabevorrichtung akustische und/oder gesprochene Informationen und in schriftlicher Form vorliegende Informationen automatisch in digitale Textnachrichten umgewandelt werden und zusammen mit Informationen zu Bedienhandlungen, Informationen zu durchgeführten Navigationsschritten und weiteren in digitalisierter Form vorliegende Textinformationen einer Verarbeitungseinheit bereitstellt werden.

Erfindungsgemäß werden in der Verarbeitungseinheit den digitalen Textnachrichten, den Informationen zu Bedienhandlungen und den durchgeführten Navigationsschritten automatisch Zeitstempel zuordnet bzw. diese damit verknüpft und mittels wenigstens eines in der Verarbeitungseinheit vorgesehenen Suchmoduls zusammen mit aus wenigstens einem Datenarchiv bereitgestellten Zeitreihendaten von Prozesssignalen- und Alarmmeldungen, Systemereignissen sowie Anlagenparametern ein entsprechender Kontext zu bestimmten Ereignissen zugeordnet.

Vorzugsweise stellt das Datenarchiv eines Überwachungssystems oder eines Leitsystems der Anlage oder des Prozesses die Informationen zu Bedienhandlungen, Prozessmeldungen, Alarmmeldungen, Systemereignissen und Anlagenparametern an die Erfassungsvorrichtung, die bereits einen Zeitstempel aufweisen, bereit.

Die so aufbereiteten digitalen Textnachrichten, Bedienhandlungen, Prozessmeldungen, Alarmmeldungen, Systemereignisse und Anlagenparameter werden über eine im Suchmodul integrierte Komplettsuche abgerufen und als Bediener- oder Ereignisprotokoll dargestellt.

Mit dem vorab beschriebenen System und Verfahren werden die Bediener der technischen Anlage oder des technischen Prozesses befähigt, alle Informationen zu erfassen, die ihnen bei ihren kooperativ ausgerichteten Arbeitssituationen begegnen, und zwar indem sie Protokolle erstellen und verschiedene Informationsquellen, zu denen wie schriftliche Informationen, wie beispielsweise Notizen und Vermerke, Emails und Arbeitsaufträge, die übergeordneten Systeme bereitstellen, Informationen zu Bedienhandlungen und Navigationsschritten/Navigationshandlungen, zählen, analysieren.

Das erfindungsgemäße Protokollier- System und entsprechende Verfahren sind in vorteilhafter Weise in ein Bedien- und Beobachtungssystem einer großtechnischen technischen Anlage oder Prozesses, insbesondere einer Öl- und Gasplattform, einer Raffinerie oder einer Kraftwerksanlage integrierbar.

Anhand des in den folgenden Figuren dargestellten Ausführungsbeispiele sollen die Erfindung sowie vorteilhafte Ausgestaltungen, Verbesserungen und weitere Vorteile der Erfindung näher erläutert und beschrieben werden.

Es zeigen:
- **Fig. 1**: eine beispielhafte Ausführungsform des erfindungsgemäßen Protokollier-Systems eines Bedien- und Beobachtungssystems,
- **Fig.** 2: eine beispielhafte Darstellung, die das erfindungsgemäße Protokollier-System auf dem Bildschirm eines Bedien- und Beobachtungssystems bereitstellt, und
- **Fig.** 3: eine beispielhafte Darstellung zur Erzeugung eines Protokolleintrages in die Verarbeitungseinheit.

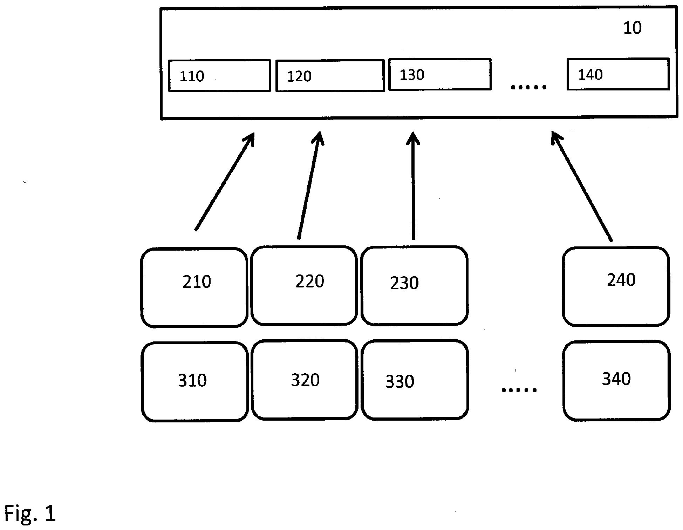

Die **Figur** 1 zeigt ein beispielhaftes Protokollier- System zur Erfassung, Aufbereitung und Darstellung von anlagen- und/oder prozessspezifischen Informationen einer großtechnischen Anlage, wie beispielsweise von Bedienhandlungen, Prozessmeldungen, Alarmmeldungen, Systemereignissen, Anlagenparametern und digitalen Textnachrichten. Das erfindungsgemäße Protokollier- System umfasst Eingabevorrichtungen 310, 320, 330 ... 340 zur Eingabe oder Bereitstellung von Informationen zu Bedienhandlungen, Prozessmeldungen, Alarmmeldungen, Systemereignissen, Anlagenparametern und/oder digitalen Textnachrichten sowie eine Verarbeitungseinheit 10, wobei die Informationen von den Eingabevorrichtungen 310, 320, 330 ... 340 mittels vorgesehener Adapter 210, 220, 230 ... 240 in die Verarbeitungseinheit 10 übertragbar sind.

Die Adapter 210, 220, 230 ... 240 sind dafür vorgesehen, die Textnachrichten, Bedienhandlungen, Prozessmeldungen, Alarmmeldungen, Systemereignisse und/oder Anlagenparameter vor ihrer Übertragung in die Verarbeitungseinheit 10 zu normieren, zu standardisieren und/oder nach vorgebbaren Parametern, wie beispielsweise Zeitanschnitten und/oder Anlagenparametern zu filtern. Ein Beispiel für eine Filterung wäre es in bestimmten Anlagenzuständen (Anlage heruntergefahren oder Anlage wird gewartet) oder für einen Zeitraum zwischen 22:00 - 6:00Uhr keine Meldungen aufzunehmen.

So sind in der Verarbeitungseinheit 10 vollständige normierte klassifizierte bzw. katalogisierte volltext- durchsuchbare Protokolleinträge abgelegt.

Als Eingabevorrichtungen 310, 320, 330 ... 340 sind eine erste Eingabevorrichtung 310, welche die akustischen und/oder gesprochene Informationen, beispielsweise aus der Leitwarte der Anlage, und/oder in schriftlicher Form vorliegende Informationen bereitstellt und diese Informationen automatisch in digitale Textnachrichten 140 umwandelt sowie eine zweite Eingabevorrichtung 320, die Informationen zu weiteren in digitalisierter Form vorliegende Textinformationen bereitstellt, vorgesehen. Die vorliegenden digitalen Textnachrichten werden mittels einem ersten Adapter 210 und einem zweiten Adapter 220 normiert, standardisiert und/oder nach vorgebbaren Parametern gefiltert und zur Verarbeitungseinheit 10 übertragen.

Eine dritte Eingabevorrichtung 330 ist dafür vorgesehen, die bereits in digitalisierter Form vorliegende Textinformationen, die ein Instandhaltungs-, Management- und/oder Einsatzplanungssystem bereitstellt, über einen entsprechenden dritten Adapter 230 zu filtern und/oder zu normieren und der Verarbeitungseinheit 10 zu liefern.

Die Informationen zu Bedienhandlungen, Prozessmeldungen, Alarmmeldungen, Systemereignissen und Anlagenparametern stellt eine vierte Eingabe- oder Erfassungsvorrichtung 340, vorzugsweise aus einem Datenarchiv eines Überwachungssystems (SCADA-System) oder Leitsystems der Anlage oder des Prozesses, bereit. Auch diese Informationen werden über einen weiteren entsprechenden Adapter 240 gefiltert und/oder normiert und der Verarbeitungseinheit 10 übergeben.

Die Verarbeitungseinheit 10 ordnet den digitalen Textnachrichten 140, den Informationen zu Bedienhandlungen und den durchgeführten Navigationsschritten mittels eines integrierten Softwaremoduls automatisch Zeitstempel 110 zu bzw. verknüpft diese damit. Mit einem Zeitstempel 110 wird einem Ereignis, hier einer Bedienhandlung oder einem Navigationsschritt ein eindeutiger Zeitpunkt zugeordnet.

Weiterhin ist in der Verarbeitungseinheit 10 ein Suchmodul integriert, welches aus den mit den entsprechenden Zeitstempeln 110 verknüpften digitalen Textnachrichten und aus den über den weiteren Adapter 240 bereitgestellten und aufbereiteten Prozesssignalen- und Alarmmeldungen, Systemereignissen sowie Anlagenparametern einen entsprechender Kontext zu bestimmten Ereignissen zuordnet.

Der Kontext gibt dabei an, welche Person oder welches Ereignis zu welchem Zeitpunkt und/oder in welcher Reihenfolge die jeweilige Textnachricht veranlasst hat.

Der Kontext kann beispielsweise einen Signalnamen 120, einen Bereich 130 und/oder eine digitale Textnachricht 140 zu einem bestimmten Ereignis (Störfall, Qualitätsproblem, Abschaltung eines Aggregats der Anlage wegen Wartung) umfassen, worüber die aufbereiteten digitalen Textnachrichten, Bedienhandlungen, Prozessmeldungen, Alarmmeldungen, Systemereignisse und Anlagenparameter mittels einer im Suchmodul integrierten Komplettsuche durchsuchbar, abrufbar und/oder als Bedienerprotokoll oder Ereignisprotokoll darstellbar sind.

Bei der Komplettsuche wird beispielsweise nach "P4711" gesucht und alles gefunden, was mit dieser Pumpe passiert ist, egal in welchem der Telefon-, SMS-, ERP-, CMMS-, DCS- Systeme Aussagen zu dieser Pumpe abgelegt sind.

Ein weiteres Beispiel könnte die Auswertung eines Störfalles dahingehend umfassen, dass zunächst ein mehrmaliger Temperaturanstieg in einem zum entsprechenden Aggregat gehörigem Sensor registriert wurde bevor das Aggregat ausfällt. Daraufhin kann nunmehr eine Überprüfung des entsprechenden Aggregates schon nach einer ersten Temperaturerhöhung erfolgen, um den Störfall in Zukunft zu vermeiden.

Auch die aus dem Stand der Technik bekannten Korrelationsanalysen zur Auswertung eines Störfalles geeignet.

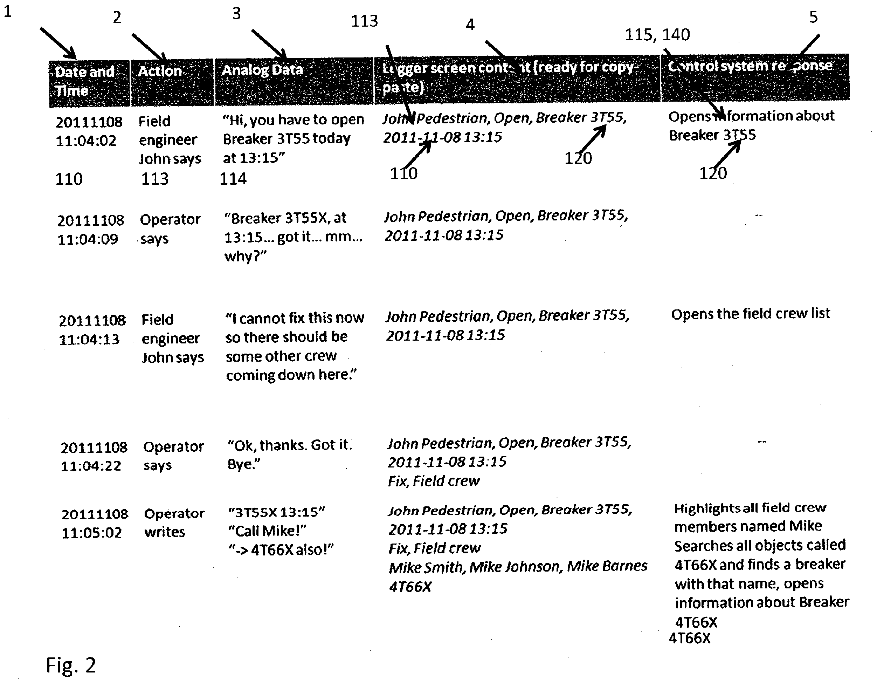

**Figur** 2 zeigt eine beispielhafte Darstellung bzw. Ansicht in Tabellenform, die das erfindungsgemäße Protokollier- Systems auf dem Bildschirm eines Bedien- und Beobachtungssystems bereitstellt.

In der ersten Spalte 1 sind die mit den digitalen Textnachrichten verknüpften Zeitstempel 110 dargestellt.

In der zweiten Spalte 2 ist dargestellt an welche Person 113 oder welches Ereignis zu welchem Zeitpunkt und/oder in welcher Reihenfolge die jeweilige Textnachricht 114, die in der dritten Spalte 3 gezeigt ist, veranlasst wurde.

In der nächsten Spalte 4 sind die Informationen 130, 140, 113, 114 aus den vorherigen Spalten 1, 2 und 3, mit einem Signalnamen 120 verknüpft, dargestellt.

Die letzte Spalte 5 sind Ereignisse dargestellt, denen ein entsprechender Kontext zu bestimmten Ereignissen zugeordnet ist. Der Kontext umfasst dabei einen Signalnamen 120 und eine digitale Textnachricht 140 zu einem bestimmten Ereignis 115, welches mittels der im Suchmodul integrierten Komplettsuche durchsuchbar und abrufbar ist.

Gemäß der vorliegenden Erfindung sind auch andere Darstellungsformen wie beispielsweise Fließbilder als Bedienprotokoll möglich.

Zur Speicherung der Informationen in der in der **Figur** 2 dargestellten Tabelle kann beispielsweise das Verfahren genutzt werden, welches in der WO 2009/112252 beschrieben ist.

Gemäß diesem Verfahren nutzen die von den Eingabevorrichtungen 310, 320, 330 ... 340 bereitgestellten Daten oder Informationen jeweils einen Aufbau, der mehrere Attribute umfasst.

In der Tabelle werden demnach ein erster Teil der zu einer Alarm- oder Ereignismeldung gehörigen Attribute normiert gespeichert.

Typische Attribute sind beispielsweise der Name des quittierenden Benutzers, der Name des Knotens an dem ein Ereignis (der Event) erzeugt wurde, der geänderter Wert vorher/nachher, der Diagnosecode und/oder der Zeitstempel 110.

Zusätzlich zur genannten normierten Speicherung des ersten Teils der Attribute werden sowohl der erste Teil als auch ein restlicher zweiter Teil der Attribute als Verfügungsdatensatz oder als sogenannter flat fallback record gespeichert. Dies kann vorteilhaft in der Sprache XML oder in der Form von BLOBs (Binary Large Objects) erfolgen, beispielsweise als Datenbankspalte oder als separate Datei.

Mit flat fallback record ist ein Speicherort sowie die Gesamtheit der dort (relativ) unstrukturiert abgelegten Attribute bezeichnet. Ein solcher, beispielsweise in XML gespeicherter Verfügungsdatensatz ist zwar für schnelle Abfragen nicht oder kaum geeignet, ist aber ein vollständiger Datensatz, der für spätere Analysen herangezogen werden kann.

Normalerweise wird der in der Tabelle gespeicherte normierte erste Teil der Attribute für Anzeigezwecke genutzt. Der erste, direkt gespeicherte Teil von Attributen ermöglicht einen sehr schnellen Zugriff. Typische Attribute die schnell verfügbar sein sollten sind z. B. Zeitstempel, Tagname, Ereigniskategorie oder Aktivierungszeitstempel. Für spätere Analysen kann die als Verfügungsdatensatz (fallback record) gespeicherte Gesamtinformation z. B. mittels XML-verarbeitender Einrichtungen moderner Datenbanken oder mittels Batch-Prozeduren wieder verfügbar gemacht werden.

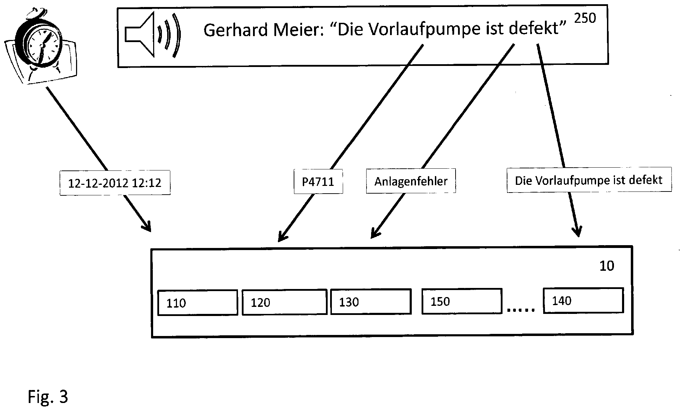

Die **Figur 3** zeigt eine beispielhafte Darstellung zur Erzeugung eines normierten klassifizierten bzw. katalogisierten volltext- durchsuchbaren Protokolleintrags in die Verarbeitungseinheit 10 mittels eines Sprachadapters 250.

Der Sprachadapter 250 erkennt zunächst eine Sprachmeldung und analysiert diese digitalisierte Rohmeldung dahingehend, dass der Begriff "Vorlaufpumpe" automatisch in die Bezeichnung "P4711" übersetzt wird. Der Begriff "Defekt" wird der Kategorie Anlagenfehler zugeordnet.

Dann wird die Meldung einem Operator bzw. Benutzer 150 "Gerhard Meier" zugeordnet und ein Zeitstempel 110 hinzugefügt.

### Bezugszeichenliste

- 1: erste Spalte
- 2: zweite Spalte
- 3: dritte Spalte
- 4: vierte Spalte
- 5: fünfte Spalte
- 10: Verarbeitungseinheit
- 110: Zeitstempel
- 113: Information zu Personen oder Ereignissen
- 114: Textnachricht
- 115: Ereignis
- 120: Signalname
- 130: Bereich
- 140: digitale Textnachricht
- 150: Benutzer
- 210: erster Adapter
- 220: zweiter Adapter
- 230: dritter Adapter
- 240: weiterer Adapter
- 250: Sprachadapter
- 310: erste Eingabevorrichtung
- 320: zweite Eingabevorrichtung
- 330: dritte Eingabevorrichtung
- 340: vierte Eingabevorrichtung

## Patentansprüche

1. Protokollier-System zur Erfassung, Aufbereitung und Darstellung von anlagen- und/oder prozessspezifischen Bedienhandlungen, Prozessmeldungen, Alarmmeldungen, Systemereignissen, Anlagenparametern und digitalen Textnachrichten einer technischen Anlage oder eines technischen Prozesses mit wenigstens einer Eingabevorrichtung (310, 320, 330, 340), welche akustische Informationen und in schriftlicher Form vorliegende Informationen automatisch in digitale Textnachrichten (140) umgewandelt und zusammen mit Informationen zu Bedienhandlungen, Informationen zu durchgeführten Navigationsschritten und weitere in digitalisierter Form vorliegende Textinformationen einer Verarbeitungseinheit (10) bereitstellt,
**dadurch gekennzeichnet,**
**dass** die Verarbeitungseinheit (10) den digitalen Textnachrichten, den Informationen zu Bedienhandlungen und den durchgeführten Navigationsschritten automatisch Zeitstempel (110) zuordnet bzw. diese damit verknüpft, mittels wenigstens eines in der Verarbeitungseinheit (10) vorgesehenen Suchmoduls zusammen mit aus wenigstens einem Datenarchiv bereitgestellten Zeitreihendaten von Prozesssignalen- und Alarmmeldungen, Systemereignissen sowie Anlagenparametern ein entsprechender Kontext zu bestimmten Ereignissen zuordenbar ist und die so aufbereiteten digitalen Textnachrichten, Bedienhandlungen, Prozessmeldungen, Alarmmeldungen, Systemereignisse und Anlagenparameter über eine im Suchmodul integrierte Komplettsuche abrufbar und als Bedienerprotokoll oder Ereignisprotokoll darstellbar sind und *dass Adapter (210, 220, 230, 240, 250) vorgesehen sind, welche die Textnachrichten aus der Erfassungseinheit in die Verarbeitungseinheit (10) übertragen, wobei die Adapter (210, 220, 230, 240, 250) die Textnachrichten standardisieren* und wobei der Adapter, welcher die akustischen Informationen bearbeitet, dafür vorgesehen ist, einen Kurznamen für ein Signal zu identifizieren und diesen anhand einer vorkonfigurierten Tabelle zu nutzen, um den Signalnamen zu identifizieren und dem Protokolleintrag zuzuordnen.

2. Protokollier-System nach Anspruch 1, **dadurch gekennzeichnet, dass** die mit den entsprechenden Zeitstempeln (110) verknüpften digitalen Textnachrichten Informationen (113) darüber umfassen, welche Person oder welches Ereignis zu welchem Zeitpunkt und/oder in welcher Reihenfolge die jeweilige Textnachricht veranlasst hat.

3. Protokollier-System nach Anspruch 1, **dadurch gekennzeichnet, dass** die in digitalisierter Form vorliegenden Textinformationen handgeschriebene Notizen und/oder Vermerke, Emails, Arbeitsaufträge und/oder Wartungs- bzw. Revisionsaufzeichnungen, welche übergeordnete Systeme der Anlage oder des Prozesses bereitstellen, sind.

4. Protokollier-System nach einem der vorherigen Ansprüche, **dadurch gekennzeichnet, dass** die Bedienhandlungen Aktionen an Komponenten der Anlage bzw. des Prozesses umfassen.

5. Protokollier-System nach einem der vorstehenden Ansprüche, **dadurch gekennzeichnet, dass** ein Überwachungssystem der Anlage oder des Prozesses die Bedienhandlungen bereitstellt.

6. Protokollier-System nach einem der vorstehenden Ansprüche, **dadurch gekennzeichnet, dass** die Navigationsschritte ein Öffnen spezifischer Bereichs- oder Trendanzeigen umfassen.

7. Protokollier-System nach einem der Ansprüche 5 oder 6, **dadurch gekennzeichnet, dass** die übergeordneten Systeme computerunterstützte Instandhaltungs-Management-Systeme (CMMS), Maintenance Management Systeme (MMS) und/oder Enterprise Ressource Planning System (ERP) sind.

8. Protokollier-System nach einem der vorstehenden Ansprüche, **dadurch gekennzeichnet, dass** die im Bedienerprotokoll aufbereiteten digitalen Textnachrichten, Bedienhandlungen, Prozessmeldungen, Alarmmeldungen, Systemereignisse und Anlagenparameter dynamisch anpassbar bzw. aktualisierbar sind.

9. Protokollier-System nach einem der vorstehenden Ansprüche, **dadurch gekennzeichnet, dass** das Datenarchiv eines Überwachungssystems oder eines Leitsystems der Anlage oder des Prozesses die Informationen zu Bedienhandlungen, Prozessmeldungen, Alarmmeldungen, Systemereignissen und Anlagenparametern an die Erfassungsvorrichtung (340) bereitstellt.

10. Verfahren zur Erfassung, Aufbereitung und Darstellung von anlagen- und/oder prozessspezifischen Bedienhandlungen, Prozessmeldungen, Alarmmeldungen, Systemereignissen, Anlagenparametern und digitalen Textnachrichten einer technischen Anlage oder eines technischen Prozesses, wobei mittels wenigstens einer Eingabevorrichtung (310, 320, 330, 340) akustische Informationen und in schriftlicher Form vorliegende Informationen automatisch in digitale Textnachrichten (140) umgewandelt werden und zusammen mit Informationen zu Bedienhandlungen, Informationen zu durchgeführten Navigationsschritten und weitere in digitalisierter Form vorliegende Textinformationen einer Verarbeitungseinheit (10) bereitstellt werden,
**dadurch gekennzeichnet,**
**dass** in der Verarbeitungseinheit (10) den digitalen Textnachrichten, den Informationen zu Bedienhandlungen und den durchgeführten Navigationsschritten automatisch Zeitstempel (110) zuordnet bzw. diese damit verknüpft werden, mittels wenigstens eines in der Verarbeitungseinheit (10) vorgesehenen Suchmoduls zusammen mit aus wenigstens einem Datenarchiv bereitgestellten Zeitreihendaten von Prozesssignalen- und Alarmmeldungen, Systemereignissen sowie Anlagenparametern ein entsprechender Kontext zu bestimmten Ereignissen zugeordnet wird und die so aufbereiteten digitalen Textnachrichten, Bedienhandlungen, Prozessmeldungen, Alarmmeldungen, Systemereignisse und Anlagenparameter über eine im Suchmodul integrierte Komplettsuche abgerufen und als Bedienerprotokoll oder Ereignisprotokoll dargestellt werden, *wobei die Textnachrichten von der Erfassungseinheit in die Verarbeitungseinheit (10) über vorgesehene Adapter (210, 220, 230,240, 250) übertragen werden, wobei in den Adaptern (210, 220, 230, 240, 250) die Textnachrichten standardisiert werden* und wobei der Adapter, welcher die akustischen Informationen bearbeitet, dafür vorgesehen ist, einen Kurznamen für ein Signal zu identifizieren und diesen anhand einer vorkonfigurierten Tabelle zu nutzen, um den Signalnamen zu identifizieren und dem Protokolleintrag zuzuordnen.

11. Verfahren nach Anspruch *10,* **dadurch gekennzeichnet, dass** die im Bedienerprotokoll aufbereiteten digitalen Textnachrichten, Bedienhandlungen, Prozessmeldungen, Alarmmeldungen, Systemereignisse und Anlagenparameter dynamisch angepasst bzw. aktualisiert werden.

12. Verwendung des Protokollier- Systems nach einem der Ansprüche 1 bis 9 und des Verfahrens nach einem der Ansprüche 10 bis 11 in Bedien- und Beobachtungssystemen technischen Anlagen oder eines technischer Prozesse, insbesondere in Öl- und Gasplattformen, einer Raffinerien oder Kraftwerksanlagen.

## Claims

1. Logging system for detecting, conditioning and presenting installation-specific and/or process-specific operator control actions, process reports, alarm reports, system events, installation parameters and digital text messages for a technical installation or a technical process having at least one input apparatus (310, 320, 330, 340) that automatically converts audible information and information that is present in written form into digital text messages (140) and provides said information, together with information relating to operator control actions, information relating to navigation steps performed and further text information that is present in digitized form, for a processing unit (10),
**characterized in that**
the processing unit (10) automatically attributes timestamps (110) to the digital text messages, the information relating to operator control actions and the navigation steps performed, or links said timestamps thereto, at least one search module provided in the processing unit (10) can be used to attribute an appropriate context, together with time series data - provided from at least one data archive - from process signals and alarm reports, system events and installation parameters, to particular events, and the digital text messages, operator control actions, process reports, alarm reports, system events and installation parameters conditioned in this manner can be retrieved using a complete search integrated in the search module and can be presented as an operating log or event log and **in that** adapters (210, 220, 230, 240, 250) are provided that transmit the text messages from the detection unit to the processing unit (10), wherein the adapters (210, 220, 230, 240, 250) standardize the text messages and wherein the adapter that handles the audible information is intended to identify a short name for a signal and, using a preconfigured table, to use this in order to identify the signal name and attribute it to the log entry.

2. Logging system according to Claim 1, **characterized in that** the digital text messages linked to the relevant timestamps (110) comprise information (113) about which person or which event has prompted the respective text message at which time and/or in which order.

3. Logging system according to Claim 1, **characterized in that** the text information that is present in digitized form is handwritten notes and/or annotations, e-mails, work orders and/or service or revision records that are provided by superordinate systems of the installation or of the process.

4. Logging system according to one of the preceding claims, **characterized in that** the operator control actions comprise actions on components of the installation or of the process.

5. Logging system according to one of the preceding claims, **characterized in that** a monitoring system of the installation or of the process provides the operator control actions.

6. Logging system according to one of the preceding claims, **characterized in that** the navigation steps comprise opening of specific region or trend displays.

7. Logging system according to either of Claims 5 and 6, **characterized in that** the superordinate systems are computerized maintenance management systems (CMMS), maintenance management systems (MMS) and/or enterprise resource planning systems (ERP).

8. Logging system according to one of the preceding claims, **characterized in that** the digital text messages, operator control actions, process reports, alarm reports, system events and installation parameters conditioned in the operating log are dynamically customizable or updateable.

9. Logging system according to one of the preceding claims, **characterized in that** the data archive of a monitoring system or of a control system for the installation or for the process provides the information relating to operator control actions, process reports, alarm reports, system events and installation parameters for the detection apparatus (340).

10. Method for detecting, conditioning and presenting installation-specific and/or process-specific operator control actions, process reports, alarm reports, system events, installation parameters and digital text messages for a technical installation or for a technical process, wherein at least one input apparatus (310, 320, 330, 340) is used to automatically convert audible information and information that is present in written form into digital text messages (140) and to provide said information, together with information relating to operator control actions, information relating to navigation steps performed and further text information that is present in digitized form, for a processing unit (10),
**characterized in that**
timestamps (110) are automatically attributed to the digital text messages, the information relating to operator control actions and the navigation steps performed, or said timestamps are linked thereto, in the processing unit (10), at least one search module provided in the processing unit (10) is used to attribute an appropriate context, together with time series data - provided from at least one data archive - from process signals and alarm reports, system events and installation parameters, to particular events, and the digital text messages, operator control actions, process reports, alarm reports, system events and installation parameters conditioned in this manner are retrieved using a complete search integrated in the search module and are presented as an operating log or event log, wherein the text messages are transmitted from the detection unit to the processing unit (10) via provided adapters (210, 220, 230, 240, 250), wherein the text messages are standardized in the adapters (210, 220, 230, 240, 250) and wherein the adapter that handles the audible information is intended to identify a short name for a signal and, using a preconfigured table, to use this in order to identify the signal name and attribute it to the log entry.

11. Method according to Claim 11, **characterized in that** the digital text messages, operator control actions, process reports, alarm reports, system events and installation parameters conditioned in the operating log are dynamically customized or updated.

12. Use of the logging system according to one of Claims 1 to 9 and of the method according to either of Claims 10 and 11 in operating and observation systems for technical installations or for technical processes, particularly in oil and gas platforms, for refineries or power station installations.

## Revendications

1. Système de journalisation destiné à acquérir, conditionner et représenter des manipulations opérationnelles spécifiques à une installation et/ou un processus, des messages de processus, des messages d'alarme, des événements de système, des paramètres d'installation et des messages textuels numériques d'une installation technique ou d'un processus technique, comprenant au moins un arrangement d'entrée (310, 320, 330, 340) qui convertit automatiquement des informations acoustiques et des informations présentes sous forme écrite en messages textuels numériques (140) et les fournit à une unité de traitement (10) conjointement avec des informations à propos des manipulations opérationnelles, des informations à propos d'étapes de navigation effectuées et d'autres informations textuelles présentes sous forme numérique,
**caractérisé en ce**
**que** l'unité de traitement (10) associe automatiquement aux informations textuelles numériques, aux informations à propos des manipulations opérationnelles et aux étapes de navigation effectuées ou lie avec celles-ci des estampilles temporelles (110), un contexte correspondant pouvant être associé à des événements donnés au moyen d'au moins un module de recherche présent dans l'unité de traitement (10) conjointement avec des données de séries chronologiques de messages de signaux de processus et d'alarme, d'événements de système ainsi que de paramètres d'installation fournies à partir d'au moins une archive de données, et les messages textuels numériques, manipulations opérationnelles, messages de processus, messages d'alarme, événements de système et paramètres d'installation ainsi conditionnés pouvant être interrogés par le biais d'une recherche complète intégrée dans le module de recherche et pouvant être représentés sous la forme d'un journal d'opérateur ou d'un journal d'événements et **en ce que** des adaptateurs (210, 220, 230, 240, 250) sont présents, lesquels transmettent les messages textuels de l'unité d'acquisition dans l'unité de traitement (10), les adaptateurs (210, 220, 230, 240, 250) normalisant les messages textuels et l'adaptateur qui traite les informations acoustiques étant conçu pour identifier un nom abrégé pour un signal et utiliser celui-ci à l'aide d'un tableau préconfiguré afin d'identifier les noms de signal et les associer à l'enregistrement de journal.

2. Système de journalisation selon la revendication 1, **caractérisé en ce que** les messages textuels numériques liés aux estampilles temporelles (110) correspondantes comportent des informations (113) indiquant quelle personne ou quel événement a donné lieu au message textuel et à quel moment et/ou dans quel ordre.

3. Système de journalisation selon la revendication 1, **caractérisé en ce que** les informations textuelles présentes sous forme numérique sont des notes et/ou des remarques manuscrites, des courriers électroniques, des ordres de travail et/ou des enregistrements de maintenance ou de révision qui sont fournis à l'installation ou au processus par des systèmes d'ordre supérieur.

4. Système de journalisation selon l'une des revendications précédentes, **caractérisé en ce que** les manipulations opérationnelles comprennent des actions sur des composants de l'installation ou du processus.

5. Système de journalisation selon l'une des revendications précédentes, **caractérisé en ce qu'**un système de surveillance de l'installation ou du processus fournit les manipulations opérationnelles.

6. Système de journalisation selon l'une des revendications précédentes, **caractérisé en ce que** les étapes de navigation comprennent une ouverture d'indicateurs de zone ou de tendances spécifiques.

7. Système de journalisation selon l'une des revendications 5 ou 6, **caractérisé en ce que** les systèmes d'ordre supérieur sont des systèmes de gestion de la maintenance assistée par ordinateur (CMMS), des systèmes de gestion de la maintenance (MMS) et/ou un progiciel de gestion intégré (ERP).

8. Système de journalisation selon l'une des revendications précédentes, **caractérisé en ce que** les messages textuels numériques, manipulations opérationnelles, messages de processus, messages d'alarme, événements de système et paramètres d'installation qui sont conditionnés dans le journal d'opérateur sont adaptables ou actualisables dynamiquement.

9. Système de journalisation selon l'une des revendications précédentes, **caractérisé en ce que** l'archive de données d'un système de surveillance ou d'un système de commande de l'installation ou du processus fournit les informations à propos des manipulations opérationnelles, des messages de processus, des messages d'alarme, des événements de système et des paramètres d'installation l'arrangement d'acquisition (340).

10. Procédé d'acquisition, de conditionnement et de représentation de manipulations opérationnelles spécifiques à une installation et/ou un processus, de messages de processus, de messages d'alarme, d'événements de système, de paramètres d'installation et de messages textuels numériques d'une installation technique ou d'un processus technique, des informations sonores et des informations présentes sous forme écrite étant converties automatiquement en messages textuels numériques (140) au moyen d'au moins un arrangement d'entrée (310, 320, 330, 340) et fournies à une unité de traitement (10) conjointement avec des informations à propos des manipulations opérationnelles, des informations à propos d'étapes de navigation effectuées et d'autres informations textuelles présentes sous forme numérique,
**caractérisé en ce**
**que** des estampilles temporelles (110) sont associées automatiquement ou liées aux messages textuels numériques, aux informations à propos des manipulations opérationnelles et aux étapes de navigation effectuées dans l'unité de traitement (10), un contexte correspondant étant associé à des événements donnés au moyen d'au moins un module de recherche présent dans l'unité de traitement (10) conjointement avec des données de séries chronologiques de messages de signaux de processus et d'alarme, d'événements de système ainsi que de paramètres d'installation fournies à partir d'au moins une archive de données, et les messages textuels numériques, manipulations opérationnelles, messages de processus, messages d'alarme, événements de système et paramètres d'installation ainsi conditionnés étant interrogés par le biais d'une recherche complète intégrée dans le module de recherche et étant représentés sous la forme d'un journal d'opérateur ou d'un journal d'événements, les messages textuels étant transmis de l'unité d'acquisition dans l'unité de traitement (10) par le biais d'adaptateurs (210, 220, 230, 240, 250) présents, les messages textuels étant normalisés dans les adaptateurs (210, 220, 230, 240, 250) et l'adaptateur qui traite les informations acoustiques étant conçu pour identifier un nom abrégé pour un signal et utiliser celui-ci à l'aide d'un tableau préconfiguré afin d'identifier les noms de signal et les associer à l'enregistrement de journal.

11. Procédé selon la revendication 10, **caractérisé en ce que** les messages textuels numériques, manipulations opérationnelles, messages de processus, messages d'alarme, événements de système et paramètres d'installation conditionnés dans le journal d'opérateur sont adaptés ou actualisés dynamiquement.

12. Utilisation du système de journalisation selon l'une des revendications 1 à 9 et du procédé selon l'une des revendications 10 à 11 dans des systèmes de commande et de surveillance d'installations techniques ou d'un processus technique, notamment dans des plates-formes pétrolières ou gazières, une raffinerie ou des installations de centrale électrique.
